# EUROPÄISCHE PATENTSCHRIFT

(11) **EP 1 092 382 B1**
(45) Veröffentlichungstag und Bekanntmachung des Hinweises auf die Patenterteilung: **11.01.2006**
(21) Anmeldenummer: 00121002.0
(22) Anmeldetag: 27.09.2000
(51) Int. Cl.: A47L 9/20, B01D 46/04

(54) **Filterabreinigungsvorrichtung für einen Schmutzsauger**
Dedusting filter apparatus for a suction cleaner
Ensemble dépoussièrage du filtre pour un aspirateur

(30) Priorität: 12.10.1999 DE 19949095
(43) Veröffentlichungstag der Anmeldung: 18.04.2001
(73) Patentinhaber: WAP Reinigungssysteme GmbH & Co., 89287 Bellenberg (DE)
(72) Erfinder: Dietz, Klaus, 89079 Ulm (DE); Werbach, Günther, 89264 Weissenhorn-Oberhausen (DE); Meyer, Silke, 89233 Neu-Ulm (DE)
(74) Vertreter: Riebling, Peter

(56) Entgegenhaltungen:
- WO-A-97/19630
- WO-A-97/20492
- DE-C- 4 138 223
- FR-A- 2 110 677
- GB-A- 1 262 023
- US-A- 3 667 195
- US-A- 4 007 026
- US-A- 4 719 662

## Beschreibung

Die Erfindung betrifft eine Filterabreinigungsvorrichtung für einen Schmutzsauger nach dem Oberbegriff des Patentanspruchs 1.

Eine derartige Filterabreinigung ist beispielsweise mit dem Gegenstand der DE 41 38 223 C1 bekannt geworden. Der Offenbarungsgehalt dieser Druckschrift soll voll inhaltlich von der vorliegenden Erfindung umfaßt sein.
Bei der genannten Druckschrift wird zur Umsteuerung des von dem Saugluftstrom auf den Fremdluftstrom ein mit einer Pleuelstange bewegbarer Zuluftkanal verwendet, der wahlweise eine der beiden Öffnungen des Filters überdeckt und luftschlüssig mit dem Fremdluftstrom verbindet.

Damit besteht aber der Nachteil, daß der Filter nicht stoßartig abgereinigt wird, sondern daß lediglich durch kontinuierliches Einströmen von Fremdluft eine Abreinigung erfolgt. Es findet also keine schlagartige Abreinigung des Filters statt.
Es hat sich jedoch herausgestellt, daß durch eine stoßartige bzw. schlagartige Abreinigung eine verbesserte Reinigungswirkung auf den Filter erreicht werden kann.

Mit der FR 2 110 677 A ist ein Verfahren zum lösen von Filtratschicht von einer Filtereinheit offenbart, wobei die Filtratschicht durch Umkehrung der Durchströmrichtung vom Filterblatt gelöst wird. Der Reinigungsvorgang wird durch einen erzeugten Luftstrom entgegen der Fliessrichting durchgeführt, wobei duch das öffnen und schließen von angeordneten Schiebern das Filtrat über einen separaten Auslass abgeführt wird.
Diese Erfindung hat den Nachteil, dass der Reinigungsvorgang lediglich durch öffnen und schließen von Schiebern und nur bedingt impulsartig durchgeführt werden kann und somit zu einer Verminderung der Reinigungswirkung führt.

Mit der US 4,719,662 A ist eine Entstaubungsvorrichtung für Textilmaschinen und Maschinenräume offenbart, welches ein siebartiges Filterelement aufweist. Am Austritt des Filterelementes ist einer schaltbaren Absaugvorrichtung, am Eintritt eine schaltbare Absperrvorrichtung angeordnet. Durch schliessen der Absperrvorrichtung und durch zuschalten der Absaugvorrichtung wird das Filterelement von Ablagerungen befreit.
Diese Erfindung hat den Nachteil, dass der Reinigungvorgang des Filterelements diskontinuierlich und nicht impulsartig durchgeführt wird und somit nur eine vermindertes Reinigungsergebnis erzielt wird.

Die Erfindung legt deshalb die Aufgabe zugrunde, eine Filterabreinigung der eingangs genannten Art so weiterzubilden, daß eine wesentlich bessere Reinigungswirkung gegeben ist.

Die Lösung der gestellten Aufgabe erfolgt erfindungsgemäß durch die kennzeichnenden Merkmale des Patentanspruchs 1.

Die Erfindung zeichnet sich dadurch aus, daß eine Steuerung des Falschluftstromes durch den Filter zum Abreinigen derart erfolgt, daß durch Ausnutzen von Druckunterschieden ein in einem Gehäuse angeordnetes Klappenelement schlagartig seine Position ändert und eine oder mehrere Öffnungen in dem Gehäuse öffnet und/oder verschließt, so daß der Falschluftstrom impulsartig an die abzureinigende Fläche des Filters gelangt.

Es werden dabei die Druckunterschiede zwischen dem Saugunterdruck und dem atmosphärischen Druck bzw. einem separat erzeugten Überdruck ausgenutzt.

Der Mechanismus besteht insgesamt aus einem bekannten, mindestens zweigeteilten Filter bzw. zwei separaten Teilfiltern und einem Gehäuse, das durch Trennwände in mehrere, vorzugsweise jedoch fünf Kammern unterteilt ist.

Wird beispielsweise ein Abreinigungsvorgang eingeleitet, so wird über eine oder mehrere Ventileinrichtungen Falschluft in Form von atmosphärischer Luft oder von Druckluft einer Kammer und Teilen des Klappenelements zugeführt, wobei dieses in Form eines Drehflügels ausgebildet ist und schlagartig beginnt sich zu bewegen, hierbei von einer ersten in einer zweite Endstellung verschwenkt und eine entsprechende Auslaßöffnung verschließt, so daß die in diese Kammer eingeleitete Falschluft zu dem zugeordneten Filter(teil) (Filterrückseite) gelangt und den Filter - aufgrund des schlagartigen Umschaltens des Klappenelements- mit einem impulsartig ausgebildeten Luftstrom versorgt. Auf dieser Weise wird der impulsartig an die Rückseite des Filters herangeleitete Luftstrom dazu verwendet, die im Filter befindlichen Schmutzteilchen abzusprengen und wegzuschleudern, wodurch eine ausgezeichnete Reinigungswirkung gegeben ist.

Das Klappenelement ist vorzugsweise mit weiteren Flügelteilen verbunden, so daß diese nicht nur zur Zufuhr von Falschluft und damit zur Einleitung der Abreinigung des Filters verwendet wird, sondern zusätzlich andere Teile des Klappenelements zur Umschaltung des Saugluftstromes von der abzureinigenden auf eine andere gereinigte Filterfläche dienen.

Das Klappenelement hat demnach eine mehrfache Funktion, nämlich einmal das schlagartige oder impulsartige Heranführen der Falschluft an die eine Filterfläche mit dem Ziel der Abreinigung dieser Filterfläche und zum zweiten das Heranführen der Saugluft auf eine andere, z.B. gegenüberliegende Filterfläche, die bestimmungsgemäß damit ihre Filterfunktion ausführt.

Die beiden Filterflächen sind gegeneinander austauschbar. Wechselweise kann die eine oder die andere Filterfläche abgereinigt werden, während die gerade nicht abgereinigte Filterfläche als reguläre Filterfläche dient, die die im Saugluftstrom enthaltenen Schmutzpartikel zurückhält.

Dieses wechselseitige Funktionieren der einander gegenüberliegenden Filterflächen ist davon abhängig, wann das Klappenelement entsprechend umgesteuert wird.

Die Umsteuerung des Klappenelements erfolgt hierbei durch Fremdluftzufuhr über jeweils einen von mehreren Einlaßstutzen am Filtergehäuse, wobei hier Ventilklappen vorgesehen sind, die entsprechend elektromotorisch, elektromagnetisch oder manuell in ihre geschlossene oder geöffnete Stellung gebracht werden.

Die Umsteuerung zwecks Abreinigung und Beaufschlagung der Filterfläche mit dem Fremdluftstrom kann elektronisch durch entsprechende Sensoren gesteuert werden. Dabei erfassen die Sensoren z.B. den Verschmutzungsgrad der Filterflächen und leiten eine Abreinigung der verschmutzen Flächen ein. Natürlich kann vorgesehen sein, daß der Abreinigungsvorgang jederzeit manuell eingeleitet werden kann.

Wichtig bei der Erfindung ist jedoch, daß das Klappenelement passiv arbeitet, d.h. es muß nicht separat angetrieben werden, sondern es wird lediglich durch den Druckunterschied zwischen dem Saug- und dem Abreinigungsluftstrom im Schmutzsauger in die eine oder die andere Stellung verschwenkt.

In eine Ausführungsform kann ferner vorgesehen werden, daß zur Abreinigung als Abreinigungsluftstrom nicht nur der normale Atmosphärenluftdruck verwendet wird, sondern daß zusätzlich ein Druckluftimpuls in diesen Luftstrom eingeführt wird oder daß statt des Abreinigungsluftstromes aus der Atmosphäre allein ein Druckluftimpuls zwecks Abreinigung auf die Filterfläche gegeben wird.

Die Formgebung des Filtergehäuses muß nicht unbedingt kreiszylindrisch sein; es kommen auch andere Filtergeometrien in Betracht. Es kann sich z. B um ein Rechteckfilter handeln oder einen quadratischen Filter oder einen Dreiecksfilter, welcher aber auch durch die hier später noch zu beschreibenden Trennwände und durch die Öffnungen in den Trennwänden definiert werden muß.
Ebenso muß natürlich das Klappenelement der Geometrie des Filtergehäuses entsprechend angepaßt werden.

Auch müssen die Filterflächen nicht notwendiger weise Teil des Filtergehäuses sein; sie können auch über entsprechende Strömungswege mit dem Filtergehäuse verbunden werden und dadurch wesentlich größer und großflächiger ausgebildet werden als die vergleichsweise hier in den Ausführungsbeispielen beschrieben sind.

Hierbei kann es z. B. vorgesehen sein, daß der Filter relativ langgestreckt ausgebildet ist und der Drehflügel zwecks Steuerung der impulsartig einzuführenden Falschluft im oberen Bereich des Filters angeordnet ist, während der gesamte untere Bereich des Filters durch entsprechende Filterflächen gebildet ist.

Es können auch ein oder mehrere Flachfilter verwendet werden, die je nach Stellung das Klappenelement mit Falschluft oder Saugluft beaufschlagt werden.

Hieraus ergibt sich, daß der Umschaltteil mit dem Klappenelement räumlich getrennt oder gehäusemäßig verbunden mit einem Filter angeordnet sein kann, wobei hierbei die Filtergeometrie - wir weiter oben ausgeführt - zweitrangig ist.

In den gezeigten Ausführungsbeispielen ist nur beispielhaft dargestellt, daß das Filtergehäuse bereits die zur Abreinigung dienenden Filterflächen aufweist, was allerdings nicht lösungsnotwendig ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert gezeichnete Draufsicht auf ein Filtergehäuse mit Umschalteinrichtung
- Figur 2:: ein schematisierter Schnitt gemäß der Linie 2/2 in Figur 1
- Figur 3:: perspektivische Untenansicht der Anordnung nach Figur 1
- Figur 4:: schematisiert die Darstellung der Strömungswege in einer bestimmten Stellung der Umschalteinrichtung

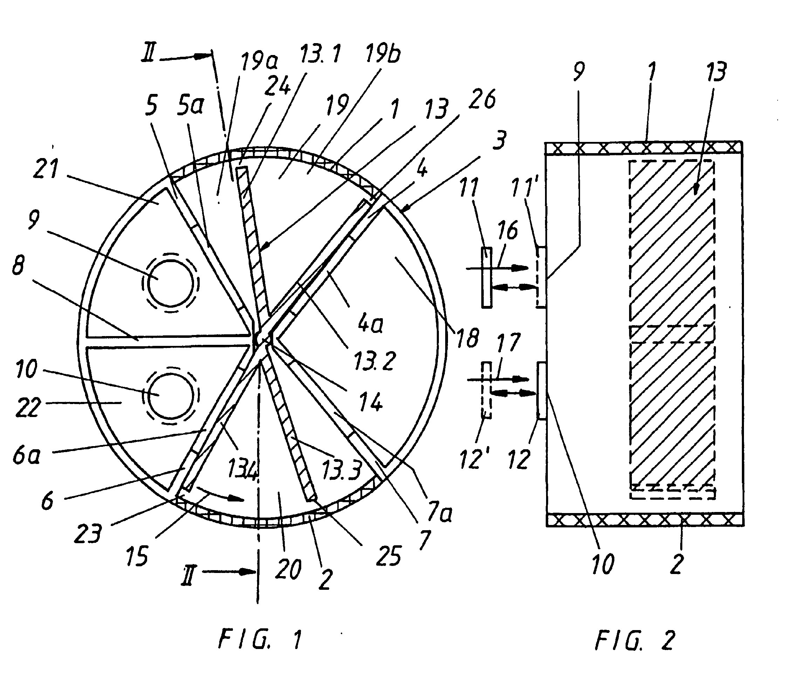

In Figur 1 bis 4 ist allgemein ein Filtergehäuse 3 als kreiszylindrisches Teil dargestellt, welches etwa rohrförmig ausgebildet ist und zwei einander gegenüberliegende Filterflächen 1, 2 aufweist.

Das Filtergehäuse 3 ist in insgesamt fünf verschiedene Kammern getrennt, nämlich die Saugstromkammer 18 und sich am Umfang sich daran anschließenden Teilkammern 19, 20, 21, 22.

Es sind hierbei Trennwände 4, 5, 6, 7 zur Abtrennung der einzelnen Kammern 18 - 22 untereinander vorgesehen, wobei in den Trennwänden 4 - 7 Öffnungen 4a - 7a vorgesehen sind.

Die Trennwand 8 ist durchgehend, d. h. sie weist keine Öffnung auf.

In die Teilkammer 21 mündet ein Einlaßstutzen 9, an dem außenliegend eine Ventilklappe 11 in Öffnungs- oder Schließstellung bringbar ist.

Es ist in Figur 2 dargestellt, daß die Ventilklappe 11 geöffnet ist und in Pfeilrichtung 16 ein Falschluftstrom durch diese geöffnete Ventilklappe 11 und den Einlaßstutzen 9 hindurch strömt.

In die Teilkammer 22 mündet der Einlaßstutzen 10, an dem außenliegend eine Ventilklappe 12 anliegt, die in Figur 2 gerade in Schließstellung dargestellt ist und die in ihre gestrichelte Offenstellung 12' bringbar ist.

Im Innenraum des Filtergehäuses 3 ist ein Klappenelement 13 schwenkbar angeordnet, der demgemäß in Pfeilrichtung 15 und in Gegenrichtung hierzu schwenkbar beweglich ausgebildet ist.

Das Klappenelement besteht aus drehfest miteinander verbundenen Umschlagflügeln 13.1 - 13.4 und ist in der Drehachse 14 frei drehbar zwischen den Trennwänden 4 - 7 gehalten.

Vorzugsweise bilden die jeweiligen Teilflügel 13.1 - 13.4 radial am Außenumfang einen Abstand zu der Innenfläche des Filtergehäuses 3, der als Expansionsspatt 23, 24 definiert wird, dessen Funktion weiter unten erläutert ist.

Ebenso ist ein radialer äußerer Abstand der äußeren Teilflügel 13.2 und 13.3 in Richtung zum Innenumfang des Filtergehäuses 3 vorgesehen, der als Strömungsspalt 25, 26 dient, dessen Funktion weiter unten erläutert ist.

Zur Erläuterung der Funktion wird folgendes vorausgesetzt:

Gemäß Figur 2 sei die Ventilklappe 11 geöffnet und es gelangt in den Einlaßstutzen 9 der ein Falschluftstrom 16 von außen her in das Filtergehäuse 3 hinein.

Der Teilflügel 13.1 des Klappenelements 13 liegt hierbei an der Trennwand 5 an und verschließt somit die Öffnung 5a, im Gegensatz zur Darstellung in Figur 1.

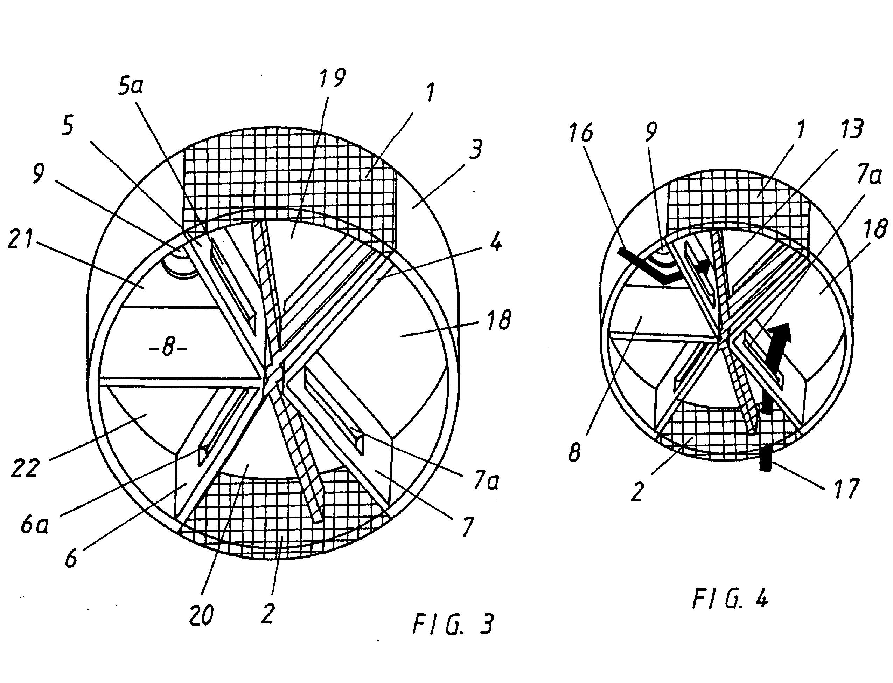

Mit Einströmen dieses Falschluftstromes 16 gemäß Figur 4 gelangt dieser durch die Öffnung 5a auf die linke die Öffnung zunächst verschließende Seite des Teilflügels 13.1 und bewegt damit das gesamte Klappenelement 13 im Uhrzeigersinn nach rechts, so daß der Teilflügel 13.1 von der Öffnung 5a abhebt, wie dies in Figur 1 dargestellt ist.

Gleichzeitig breitet sich der in die Kammer einströmende Luftstrom in der Teilkammer 19a explosionsartig aus, weil eine starke Expansion stattfindet, und die Falschluft strömt über den Expansionsspalt 24 in die benachbarte Teilkammer 19b, so daß das Klappenelement 13 schlagartig umschlägt und hierbei in seine in Figur 1 dargestellte Endlage gerät.

Die Falschluft 16 strömt nun über die Öffnung 5a und den Expansionsspalt 24 gegen die gesamte Filterfläche des Teilfilters 1, von innen nach außen, weil die Luft sich über den Expansionsspalt 24 in der gesamten Teilkammer 19a, 19b ausbreitet.

Gleichzeitig verschließt der Teilflügel 13.2 die Öffnung 4a in der Trennwand 4 und der Teilflügel 13.4 verschließt die Öffnung 6a in der Trennwand 6, während der Teilflügel 13.3 die Öffnung 7a in der Trennwand 7 freigibt.

Dies führt dazu, daß der Saugluftstrom 17 nun gemäß Figur 4 von außen her durch den Filter 2 hindurchtreten kann, in die Kammer 20 eintritt und durch die Öffnung 7a in die Saugstromkammer 18 mündet, wo er über einen nicht näher dargestellten Abluftkanal abgeführt wird. Der Teilfilter 2 wird somit im normalen Saugbetrieb verwendet, während Teilfilter 1 stoßartig abgereinigt wird und gereinigt für einen späteren Saugbetrieb zur Verfügung steht.

Wenn entsprechend die Ventilklappen 11, 12 in ihre jeweils andere Stellung 11', 12' gebracht werden, erfolgt in analoger Weise das Abreinigen der Filterfläche 2, während der Saugluftstrom 17 durch die Filterfläche 1 dringt.

Bei dem Klappenelement 13 sind zwei etwa diametral gegenüberliegende Teilflügel 13.2 und 13.4 vorhanden, von denen jeweils ein Teilflügel eine der Öffnungen 4a, 6a verschließt. In analoger Weise verschließen die Teilflügel 13.1 und 13.3 die Öffnungen 5a und 7a.

Die aus der Filterfläche 1 austretende Falschluft, die der Reinigung der Filterfläche 1 dient, kann in den Saugstrom 17 durch den Teilfilter 2 zurück geführt werden, wodurch dieser dann in geringfügigem Maße mit den abgereinigten Schmutzpartikeln der Filterfläche 1 belastet wird.
Der größte Teil des abgereinigten Schmutzes wird jedoch schwerkraftbedingt auf den Boden des Gehäuses fallen, wo er zeitweise entleert werden muß.

Die nicht unterbrochene Trennwand 8 zwischen den Teilkammern 21 und 22 dient im übrigen zur Kühlung des Falschluftstromes 16, der über den Einlaßstutzen 9 in die Teilkammer 21 einströmt. Hier wird er die Trennwand 8 in Richtung zur kälteren Teilkammer 22 berühren, welche von dem kälteren Saugluftstrom 17 gekühlt wird.

Die Kühlung des Falschluftstromes hat den Vorteil, daß die zur Erzeugung der Luftströme verwendete Turbine des Schmutzsaugers zusätzlich zum Saugluftstrom mit selbigem Falschluftstrom gekühlt wird. Damit wird erreicht, daß das Turbinengehäuse und der Motor ausreichend gekühlt werden, auch wenn viele Abreinigungsvorgänge in Folge stattfinden.
Ein häufiges Abreinigen der Filterteile 1, 2, könnte z. B. beim Beseitigen von sehr feinkörnigen Staub im Mikronenbereich (Schleifstäube) notwendig sein.

### Zeichnungslegende

- 1.: Filterfläche
- 2.: Filterfläche
- 3.: Filtergehäuse
- 4.: Trennwand 4a Öffnung
- 5.: Trennwand 5a Öffnung
- 6.: Trennwand 6a Öffnung
- 7.: Trennwand 7a Öffnung
- 8.: Trennwand
- 9.: Einlaßstutzen
- 10.: Einlaßstutzen
- 11.: Ventilklappe 11'
- 12.: Ventilklappe 12'
- 13.: Klappenelement 13.1 - 13.4 Teilflügel
- 14.: Drehachse
- 15.: Pfeilrichtung
- 16.: Falschluftstrom
- 17.: Saugstrom
- 18.: Saugstromkammer
- 19.: Teilkammer 19a, 19b
- 20.: Teilkammer
- 21.: Teilkammer
- 22.: Teilkammer
- 23.: Expansionsspalt
- 24.: Expansionsspalt
- 25.: Strömungsspalt
- 26.: Strömungsspalt

## Patentansprüche

1. Filterabreinigungsvorrichtung für einen Schmutzsauger, wobei die Filterabreinigungsvorrichtung ein Filtergehäuse (3) und Filter oder Teile eines Filters (1, 2) aufweist, wobei die Abreinigung des Filters oder Teilen des Filters durch Zufuhr eines Falschlu stroms erfolgt, wobei eine Steuerung des Falschluftstromes (16) durch den Filter oder Filterteil (1; 2) zum Abreinigen derart erfolgt, dass durch Ausnutzen von Druckunterschieden ein in dem Gehäuse (3) angeordnetes Klappenelement (13), welches als Drehflügel mit mehreren Teilflügeln (13.1-13.4) ausgebildet ist, schlagartig seine Position ändert und eine oder mehrere Öffnungen (4a; 5a; 6a; 7a) in dem Gehäuse (3) öffnet und/oder verschließt, so dass der Falschluftstrom (16) impulsartig an die abzureinigende Fläche des Filters oder Filterteils (1; 2) gelangt, **dadurch gekennzeichnet, dass** das Klappenelement (13) zwei angrenzend beieinander liegende Teilflügel (13.1, 13.2)umfasst.

2. Filterabreinigungsvorrichtung nach Anspruch 1, **dadurch gekennzeichnet, dass** zur Steuerung des Klappenelements (13) die Druckunterschiede zwischen dem Saugunterdruck (17) und dem atmosphärischen Druck bzw. einem separat erzeugten Überdruck ausgenutzt werden.

3. Filterabreinigungsvorrichtung nach Anspruch 1 oder 2, **dadurch gekennzeichnet, dass** das Gehäuse (3) durch Trennwände (4-7) in mehrere Kammern (19-22) unterteilt ist, wobei wenigstes zwei der Kammern (19; 20) jeweils ein Filter (1; 2) oder Filterteil zugeordnet ist.

4. Filterabreinigungsvorrichtung nach einem der Ansprüche 1 bis 3, **dadurch gekennzeichnet, dass** der Umschaltteil mit dem Klappenelement (13) räumlich getrennt oder gehäusemässig verbunden mit dem Filter (1; 2) angeordnet ist.

5. Filterabreinigungsvorrichtung nach einem der Ansprüche 1 bis 4, **dadurch gekennzeichnet, dass** das Klappenelement (13) nicht direkt angetrieben ist sondern passiv arbeitet.

6. Filterabreinigungsvorrichtung nach Anspruch 3, **dadurch gekennzeichnet, dass** über eine oder mehrere Ventileinrichtungen (11; 12) wenigstens einer der Kammern (21; 19) und Teilen des Klappenelements (13) Falschluft in Form von atmosphärischer Luft oder von Druckluft zugeführt wird, wobei dieses schlagartig beginnt sich um eine Achse (14) zu bewegen, hierbei von einer ersten in einer zweite Endstellung verschwenkt und eine entsprechende Auslassöffnung (4a) verschließt, so daß die in diese Kammer (19) eingeleitete Falschluft (16) zu dem zugeordneten Filter (1) gelangt und diesen mit einem impulsartig ausgebildeten Luftstrom versorgt.

7. Filterabreinigungsvorrichtung nach einem der Ansprüche 1 bis 6, **dadurch gekennzeichnet, dass** das Klappenelement (13) weitere Teilflügel (13.3,13.4) umfasst, die zur Umschaltung des Saugluftstromes (17) von der abzureinigenden auf eine andere, gereinigte Filterfläche (2) dienen.

8. Filterabreinigungsvorrichtung nach einem der Ansprüche 1 bis 7, **dadurch gekennzeichnet, dass** das Klappenelement (13) wechselweise umgesteuert wird.

9. Filterabreinigungsvorrichtung nach einem der Ansprüche 1 bis 8, **dadurch gekennzeichnet, dass** die Umsteuerung des Klappenelements (13) durch Fremdluftzufuhr (16) über jeweils einen von mehreren Einlassstutzen (9; 10) am Filtergehäuse (3) erfolgt, wobei Ventilklappen (11; 12) vorgesehen sind, die entsprechend elektromotorisch oder elektromagnetisch in ihre geschlossene oder geöffnete Stellung bringbar sind.

10. Filterabreinigungsvorrichtung nach einem der Ansprüche 1 bis 9, **dadurch gekennzeichnet, dass** die Umsteuerung zwecks Abreinigung und Beaufschlagung der Filterfläche (1; 2) mit dem Fremdluftstrom (16) elektronisch durch entsprechende Sensoren gesteuert wird.

11. Filterabreinigungsvorrichtung nach einem der Ansprüche 1 bis 10, **dadurch gekennzeichnet, dass** die Sensoren den Verschmutzungsgrad der Filterflächen (1; 2) erfassen.

12. Filterabreinigungsvorrichtung nach einem der Ansprüche 1 bis 11 **dadurch gekennzeichnet, dass** die Abreinigung manuell eingeleitet wird.

13. Filterabreinigungsvorrichtung nach einem der Ansprüche 1 bis 12 **dadurch gekennzeichnet, dass** die Filterflächen (1; 2) über entsprechende Strömungswege mit dem Filtergehäuse (3) verbunden sind.

14. Filterabreinigungsvorrichtung nach einem der Ansprüche 1 bis 13, **dadurch gekennzeichnet, dass** der Filter (1; 2) relativ langgestreckt ausgebildet ist und das Klappenelement (13) im oberen Bereich des Filters angeordnet ist, während der gesamte untere Bereich des Filters durch entsprechende Filterflächen (1; 2) gebildet ist.

15. Filterabreinigungsvorrichtung nach einem der Ansprüche 1 bis 14, **dadurch gekennzeichnet, dass** als Filterelement (1; 2) ein oder mehrere Flachfilter verwendet werden.

## Claims

1. Filter cleaning device for a vacuum cleaner, wherein the filter cleaning device has a filter housing (3) and filter or parts of a filter (1, 2), wherein the filter or parts of the filter are cleaned by supplying a secondary air flow, the secondary air flow (16) being controlled by the filter or filter part (1; 2) for cleaning in such a way that by exploiting pressure differences, a flap element (13) which is arranged in the housing (3) and is configured as a rotary vane with a plurality of part vanes (13.1 to 13.4), abruptly changes its position and opens and/or closes one or more openings (4a; 5a; 6a; 7a) in the housing (3), so the secondary air flow (16) reaches the surface of the filter or filter part (1; 2) to be cleaned in a pulsed manner, **characterised in that** the flap element (13) comprises two adjacent part vanes (13.1, 13.2).

2. Filter cleaning device according to claim 1, **characterised in that** the pressure differences between the suction vacuum (17) and the atmospheric pressure or a separately produced excess pressure are exploited to control the flap element (13).

3. Filter cleaning device according to claim 1 or 2, **characterised in that** the housing (3) is divided by partitions (4 to 7) into a plurality of chambers (19 to 22), at least two of the chambers (19; 20) being associated with a respective filter (1; 2) or filter part.

4. Filter cleaning device according to any one of claims 1 to 3, **characterised in that** the change-over part with the flap element (13) is arranged spatially separated or connected to the filter (1; 2) in terms of the housing.

5. Filter cleaning device according to any one of claims 1 to 4, **characterised in that** the flap element (13) is not driven directly but operates passively.

6. Filter cleaning device according to claim 3, **characterised in that** secondary air in the form of atmospheric air or compressed air is supplied to at least one of the chambers (21; 19) and parts of the flap element (13) via one or more valve mechanisms (11; 12), wherein this flap element begins to move abruptly about an axis (14), pivoting here from a first end position into a second end position and closing a corresponding outlet aperture (4a) so the secondary air (16) introduced into this chamber (19) reaches the associated filter (1) and supplies it with a pulsed air flow.

7. Filter cleaning device according to any one of claims 1 to 6, **characterised in that** the flap element (13) comprises further part vanes (13.3, 13.4), which are used to change over the suction air flow (17) from the filter surface to be cleaned to another, cleaned filter surface (2).

8. Filter cleaning device according to any one of claims 1 to 7, **characterised in that** the flap element (13) is switched over alternately.

9. Filter cleaning device according to any one of claims 1 to 8, **characterised in that** the flap element (13) is switched over by the supply of extraneous air (16) via one, in each case, of a plurality of inlet connections (9; 10) on the filter housing (3), valve shutters (11; 12) being provided which can be correspondingly brought by an electric motor or electromagnetically into their closed or open position.

10. Filter cleaning device according to any one of claims 1 to 9, **characterised in that** the switch-over is controlled electronically by corresponding sensors for the purpose of cleaning and impinging on the filter surface (1; 2) with the extraneous air flow (16).

11. Filter cleaning device according to any one of claims 1 to 10, **characterised in that** the sensors detect the degree of soiling of the filter surfaces (1; 2).

12. Filter cleaning device according to any one of claims 1 to 11, **characterised in that** the cleaning is initiated manually.

13. Filter cleaning device according to any one of claims 1 to 12, **characterised in that** the filter surfaces (1; 2) are connected to the filter housing (3) via corresponding flow paths.

14. Filter cleaning device according to any one of claims 1 to 13, **characterised in that** the filter (1; 2) is relatively elongated in design and the flap element (13) is arranged in the upper region of the filter, while the entire lower region of the filter is formed by corresponding filter surfaces (1; 2).

15. Filter cleaning device according to any one of claims 1 to 14, **characterised in that** one or more flat filters are used as a filter element (1; 2).

## Revendications

1. Dispositif de dépoussiérage de filtre pour un aspirateur, comportant un boîtier de filtre (3) et des filtres ou des éléments d'un filtre (1, 2), le dépoussiérage du filtre ou d'éléments du filtre se faisant grâce à l'amenée d'un courant d'air parasite, et un guidage de ce courant d'air parasite (16) à travers le filtre ou l'élément de filtre (1 ; 2) en vue du dépoussiérage se faisant grâce au fait qu'à l'aide de différences de pression, un élément formant clapet (13) qui est disposé dans le boîtier (3) et qui est conçu comme un rotor avec plusieurs palettes (13.1-13.4) change brusquement de position et ouvre et/ou ferme plusieurs ouvertures (4a ; 5a ; 6a ; 7a) du boîtier (3), de sorte que le courant d'air parasite (16) arrive par impulsions sur la surface du filtre ou de l'élément de filtre qui doit être dépoussiérée, **caractérisé en ce que** l'élément formant clapet (13) comprend deux palettes voisines (13.1, 13.2).

2. Dispositif de dépoussiérage de filtre selon la revendication 1, **caractérisé en ce que** pour commander l'élément formant clapet (13), on utilise les différences de pression entre la dépression d'aspiration (17) et la pression atmosphérique ou une surpression produite séparément.

3. Dispositif de dépoussiérage de filtre selon la revendication 1 ou 2, **caractérisé en ce que** le boîtier (3) est divisé en plusieurs chambres (19-22) par des cloisons (4-7), un filtre (1 ; 2) ou un élément de filtre étant associé à au moins deux de ces chambres (19 ; 20).

4. Dispositif de dépoussiérage de filtre selon l'une des revendications 1 à 3, **caractérisé en ce que** l'élément de commutation avec l'élément formant clapet (13) est disposé séparément dans l'espace ou est relié au filtre (1 ; 2) par l'intermédiaire du boîtier.

5. Dispositif de dépoussiérage de filtre selon l'une des revendications 1 à 4, **caractérisé en ce que** l'élément formant clapet (13) n'est pas entraîné directement, mais fonctionne de manière passive.

6. Dispositif de dépoussiérage de filtre selon la revendication 3, **caractérisé en ce que** par l'intermédiaire d'un ou plusieurs dispositifs de soupape (11 ; 12), de l'air parasite est amené sous forme d'air atmosphérique ou d'air comprimé dans l'une au moins des chambres (21 ; 19) et dans des parties de l'élément formant clapet (13), lequel commence brusquement à tourner sur un axe (14), passe d'une première à une seconde position de fin de course et ferme une ouverture de sortie correspondante (4a) de telle sorte que l'air parasite (16) introduit dans cette chambre (19) arrive sur le filtre associé (1) et fournit à celui-ci un courant d'air impulsionnel.

7. Dispositif de dépoussiérage de filtre selon l'une des revendications 1 à 6, **caractérisé en ce que** l'élément formant clapet (13) comprend d'autres palettes (13.3, 13.4) qui servent à faire passer le courant d'air aspiré (17) de la surface à dépoussiérer à une autre surface filtrante (2) dépoussiérée.

8. Dispositif de dépoussiérage de filtre selon l'une des revendications 1 à 7, **caractérisé en ce que** l'élément formant clapet (13) est inversé en alternance.

9. Dispositif de dépoussiérage de filtre selon l'une des revendications 1 à 8, **caractérisé en ce que** l'inversion de l'élément formant clapet (13) se fait grâce à une amenée d'air extérieur (16) par l'intermédiaire de l'une des tubulures d'admission (9 ; 10) prévues sur le boîtier de filtre (3), étant précisé qu'il est prévu des clapets de soupape (11 ; 12) qui sont aptes à être amenés dans leur position fermée ou ouverte grâce à un moteur électrique ou à un électroaimant.

10. Dispositif de dépoussiérage de filtre selon l'une des revendications 1 à 9, **caractérisé en ce que** l'inversion opérée pour dépoussiérer et pour solliciter la surface filtrante (1 ; 2) avec le courant d'air extérieur (16) est commandée par voie électronique grâce à des capteurs appropriés.

11. Dispositif de dépoussiérage de filtre selon l'une des revendications 1 à 10, **caractérisé en ce que** les capteurs détectent le degré d'encrassement des surfaces filtrantes (1 ; 2).

12. Dispositif de dépoussiérage de filtre selon l'une des revendications 1 à 11, **caractérisé en ce que** le dépoussiérage est déclenché manuellement.

13. Dispositif de dépoussiérage de filtre selon l'une des revendications 1 à 12, **caractérisé en ce que** les surfaces filtrantes (1 ; 2) sont reliées par l'intermédiaire de trajectoires d'écoulement appropriées au boîtier de filtre (3).

14. Dispositif de dépoussiérage de filtre selon l'une des revendications 1 à 13, **caractérisé en ce que** le filtre (1 ; 2) a une forme relativement allongée et l'élément formant clapet (13) est disposé dans la zone supérieure du filtre tandis que toute la zone inférieure du filtre est formée par des surfaces filtrantes appropriées (1 ; 2).

15. Dispositif de dépoussiérage de filtre selon l'une des revendications 1 à 14, **caractérisé en ce qu'**on utilise comme élément filtrant (1 ; 2) un ou plusieurs filtres plats.
